# EUROPEAN PATENT APPLICATION

(11) **EP 0 765 601 A1**
(43) Date of publication of application: **02.04.1997**
(21) Application number: 95500129.2
(22) Date of filing: 26.09.1995
(51) Int. Cl.: A01N 25/00, A01N 37/46

(54) **A bait to attract flies**

(71) Applicant: Valverde Garcia, Antonio, 30840 Alhama de Murcia (Murcia) (ES); Ribera Otamendi, José, 46008 Valencia (ES)
(72) Inventor: Valverde Garcia, Antonio, E-30840-Alhama de Murcia (ES)
(74) Representative: Flaccus, Rolf-Dieter, Dr.

(57) **Abstract**

A bait to attract flies both in the farm and at home; such consists of a grey water-soluble powder comprising by weight 0.20% of Thaumatin as agent to attract insects; 0.30% of flavouring; 0.95% of powdered sugar as fixing agent for the composition at the point of application; and 17.50-10.00% of an organophosphorated derivative as insecticidal agent.

The field of application of the bait is very general, and its formulation will allow it to be used intensively in farms and at home, for it poses no risk of toxicity.

## Description

The present Patent relates to a bait to attract flies which affords a number of advantages to the function for which it has been designed, as discussed hereinafter, and others that are inherent in its arrangement and construction.

Various kinds of prior art baits are currently known useful in the agricultural market to battle with and eliminate flies in citrus plantations, commonly known as Mediterranean flies, which bite and stain and indeed spoil the fruits. Baits of this kind are as listed below:
1. Insecticidal baits
2. Baits
3. Pheromones.

Insecticidal Baits are insecticides with a chemical composition that actually attracts the pest that is to be opposed.

Baits are products that work only by attraction and must be mixed with insecticides to be used in the field of agriculture.

Products of this kind are very few in the field of agriculture, and indeed only two are available, one of which is almost never used, both products having the same origin, namely HYDROLYSED PROTEINS.

They are primarily used to attract the various flies that attack crops such as citruses, fruit-trees, olive trees, cherry trees, etc.

They generally last on average no more than between 7 and 10 days.

Pheromones are substances secreted and released by an individual that may be detected by another individual or other individuals of the same species, and causing a particular response in such individual or individuals.

They are usually employed most in controlling flights and activity periods.

When used for this purpose, pheromones indicate when adult insects become active in order to proceed with a treatment using insecticides to prevent egg-laying by insects, particularly Lepidoptera, insofar as possible.

Pheromones are chemical substances derived from terpenes or fatty acids.

The baits mentioned hereinabove, which broadly speaking stand for the prior art, must however be applied at least weekly and taking all due precautions because of their toxicity, their effectiveness being of up to around 60%, which, albeit diminishing with the lapse of time, lives on to a dangerous toxic extent in the event of humans consuming the fruits.

The applicant for this Patent has developed a bait that offers a better effectiveness against Mediterranean flies, among other insects, for a longer time-period and without being hazardous if the fruit is consumed during this period of time.

The subject-matter of this invention would fall within the group of BAITS for it is designed to attract insects to the point of application.

The bait subject of the invention uses a protein of plant origin which conveniently replaces the hydrolysed proteins of conventional baits, for proteins of a plant origin are known to be used in human and animal food and there is therefore no toxicity for both human beings and land and marine fauna.

Unlike hydrolysed proteins, plant proteins have an average useful life in excess of 20 days and their use will therefore diminish the number of treatments to be applied.

A flavouring is used for the first time and the bait will therefore take speedy action and consequently be immediately effective in both closed environments and open spaces.

The product subject of the present Patent is hence comprised by a plant protein acting as an attractant; a flavouring which enhances protein action and acts as a rapid attractant, and an excipient, namely sugar, having various functions within the mixture, noteworthy being, inter alia, the following: to enhance protein stability and fix the bait and the flavouring on whichever supports the bait is to act upon after the insecticide is added.

In accordance with the present invention, the agent used to attract insects is thaumatin, a natural protein having a well-known amino acid sequence that is widely and acceptably used in both human and animal consumption and has a very peculiar sweet taste.

Thaumatin is extremely water-soluble, and may be diluted up to 60%, and 100 ml of this solution could sweeten 30 Mt of water.

Thaumatin is a remarkably heat-stable protein. Stability is related to pH, temperature and the presence of other substances such as oxygen, polysaccharides or synthetic colours. Its stability is generally good at a somewhat acid pH, it can be boiled (100°C) for hours without any sweetening power being lost when pH is below 5.5, and it may be used in soft drinks (pH 2.8-3.5).

The presence of sugar or glucose enhances stability, although certain acid polysaccharides may reduce its sweet taste.

Thaumatin is less heat-stable at a high pH though it is stable at room temperature even at a pH of 8-9. Thaumatin is stable in conditions of extreme acidity pH 1, though the sweet taste is disguised by an acid below pH 2. Stability is at its highest in thaumatin at pH 2.7-6.0 and best at 2.8 to 3.0.

It is surprising for a protein to have such a peculiar taste for when protides are affected by enzymes the resulting substances are usually sour; apart from monelin only thaumatin is a sweet protein. Sweetness is difficult to quantify, for it is a highly subjective feeling and depends upon pH, concentration, temperature and the presence of other ingredients.

When the new sweetener was first developed thaumatin was found to be between 2000 and 2500 times sweeter than sucrose at normal levels, albeit with new and outstanding qualities.

The qualities of this sweetener can be modulated or modified in other sweeteners or be complemented with scents and flavours.

The properties of thaumatin can vary in accordance with the product in which it is used, acting in order to (a) modify taste when associated to other additives, and (b) advantageously modifying taste in certain products due to its influence in fostering certain flavours.

In the light of the above background, thaumatin is clearly a substance that enhances the attraction of insects towards points where it is applied, favouring exposure of insects to the insecticidal agent included in the composition of the bait of the invention.

Any organophosphorated derivative already known for its destructive effects on Mediterranean flies and other assorted insects can be used as insecticidal agent with the bait of the invention. It has particularly been found that a preferred insecticide is a mixture comprising the organophosphorated derivative, powdered sugar and an insecticidally effective vehicle.

The fixing agent used for the composition of the bait of the invention to stick to the leaves of trees and shrubs or any other point of application is preferably powdered sugar.

Finally, the flavouring-aromatic agent used is any of the well-known compounds having such properties.

In accordance with the above, the bait subject of the invention clearly has a substantially general field of application, and may attract household mosquitos and flies and an assortment of other insects. Given its formula, the bait subject hereof can be used intensively in farms, in agriculture and indeed at home, for it poses no risk of toxicity whatsoever.

The composition of the bait to attract flies both in the farm and at home has the following qualitative-quantitative weight percentage formula:
- 0.20% of thaumatin as agent to attract insects.
- 0.30% of flavouring, in particular Apetenzyme 21.
- 0.95% of powdered sugar as a fixing agent for the composition at the point of application.

The bait can generally be mixed with an insecticide of any kind that acts on flies; a preferred insecticidal agent would be a pyrethroid, and in particular 10% Bifentrin.

The bait is in the form of a grey water-soluble powder which will be marketed packed in packets of various sizes.

## Claims

1. A bait to attract flies, essentially **characterised** by consisting of a water-soluble powder mixture comprising by weight 0.20% of Thaumatin as agent to attract insects; 0.30% of Apetenzyme 21 as flavouring agent; 0.95% of powdered sugar as fixing agent for the composition at the point of application; and 17.50-10.00% of an organophosphorated derivative as insecticidal agent.

2. A bait to attract flies, as in claim 1, **characterized** in that the insecticidal agent is used mixed with powdered sugar and an effective insecticidal vehicle.

3. A bait to attract flies, as in claims 1 and 2, **characterized** in that the insecticidal agent is a pyrethroid such as 10% Bifentrin.
